# EUROPEAN PATENT SPECIFICATION

(11) **EP 2 375 817 B1**
(45) Date of publication and mention of the grant of the patent: **17.05.2017**
(21) Application number: 10012921.2
(22) Date of filing: 05.10.2006
(51) Int. Cl.: H04W 36/12

(54) **Mobile communications cell changing procedure**
Verfahren zum Wechseln einer Zelle für Mobilkommunikation
Procédé de changement de cellule pour des communications mobiles

(30) Priority: 06.10.2005 GB 0520341
(43) Date of publication of application: 12.10.2011
(62) Divisional of application: 06121801.2
(73) Proprietor: Samsung Electronics Co., Ltd., Suwon-si, Gyeonggi-do, 443-742 (KR)
(72) Inventor: Van der Velde, Himke, Staines Middlesex TW18 4QE (GB); Van Lieshout, Gert Jan, Staines Middlesex TW18 4QE (GB); Jeong, Kyeong-In, Suwon-si Gyeonggi-do (KR)
(74) Representative: Grünecker Patent- und Rechtsanwälte PartG mbB

(56) References cited:
- US-A1- 2003 108 027
- QUALCOMM: "Enhanced HSDPA Re-pointing Scheme", , [Online] 29 August 2005 (2005-08-29), pages 1-8, XP002416750, Retrieved from the Internet: URL:http://www.3gpp.org/ftp/tsg_ran/WG2_RL 2/TSGR2_48/Documents/> [retrieved on 2007-01-25]
- LUCENT: "Proposal for supporting Real Time services over HSDPA", R2-050915, 4 April 2005 (2005-04-04), pages 1-6, XP002368691,
- SAMSUNG: "HSDPA re-pointing", 3GPP TSG-RAN WG2 #48BIS, R2-052528, [Online] 10 October 2005 (2005-10-10), pages 1-6, XP002416752, Retrieved from the Internet: URL:http://www.3gpp.org/ftp/tsg_ran/WG2_RL 2/TSGR2_48bis/Documents/> [retrieved on 2007-01-25]

## Description

### BACKGROUND OF THE INVENTION

### Field of the Invention:

The present invention relates to a cell changing procedure in the field of mobile telecommunications. More particularly, the present invention relates to a method and apparatus involving high speed downlink shared channel cell changing procedures.

### Description of the Related Art:

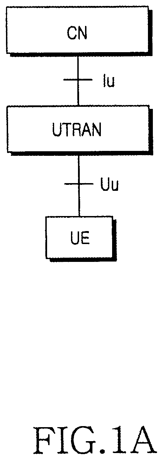

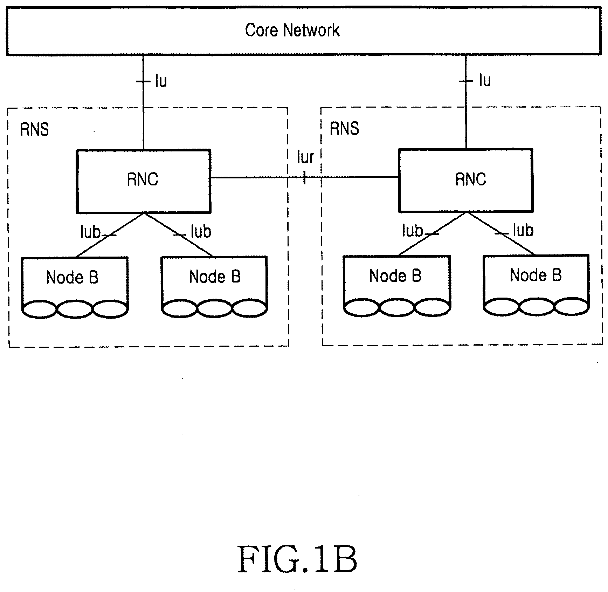

The typical architecture of a cellular radio system comprises mobile user equipments (UEs), a radio access network (RAN) and one or more core networks (CNs) as illustrated in FIG. 1A and 1B for the Universal Mobile Telecommunications System (UMTS). A UMTS is based on a third generation radio network that uses wideband code division multiple access (W-CDMA) technology.

The typical architecture of a radio access network comprises base stations and radio network/ base station controllers (RNC/ BSC). The base stations handle the actual communication across the radio interface and cover a specific geographical area also referred to as a cell. In addition to controlling the base stations connected to the RNCs, the RNCs include functionality such as the allocation of radio resources and local mobility, among others. An RNC connects to one or more core networks via the Iu interface. The RNC also connects to a number of base stations such as node Bs for environments that utilize a UMTS Terrestrial Radio Access Network (UTRAN) via the Iub interface and possibly to one or more other RNCs via the Iur interface.

HS-DPA (High-Speed Downlink Packet Access) is a Downlink Shared channel added to the UMTS in 3GPP Release 5 (Rel-5). Instead of using dedicated resources, resources are shared between UEs and allocated to specific UEs when the specific resources are required for a single transmission.

In Rel-5 of UMTS, the High Speed Downlink Packet Access (HS-DPA) channel is introduced to facilitate higher throughputs in downlink. The HS-DPA channel is different from dedicated channels that are only used for a specific UE in that it employs channels that are shared between different UEs in the cell.

When using dedicated channels, the downlink information may be transferred via more than one cell. For example, the UE may combine the information received from different cells. This parallel reception is most relevant when the UE is at the edge of a cell, where the quality of the radio connection (also referred to as the radio link) is the lowest. When moving towards the cell edge, the network may establish radio connections to neighboring cells in order to maintain the overall quality. This technique allows for a soft handover, since the connection to the neighboring cell is established prior to the release of the connection to the current cell. This technique is also referred to as 'make before break'. The set of cells with which the UE is maintaining a radio connection is referred to as the active set.

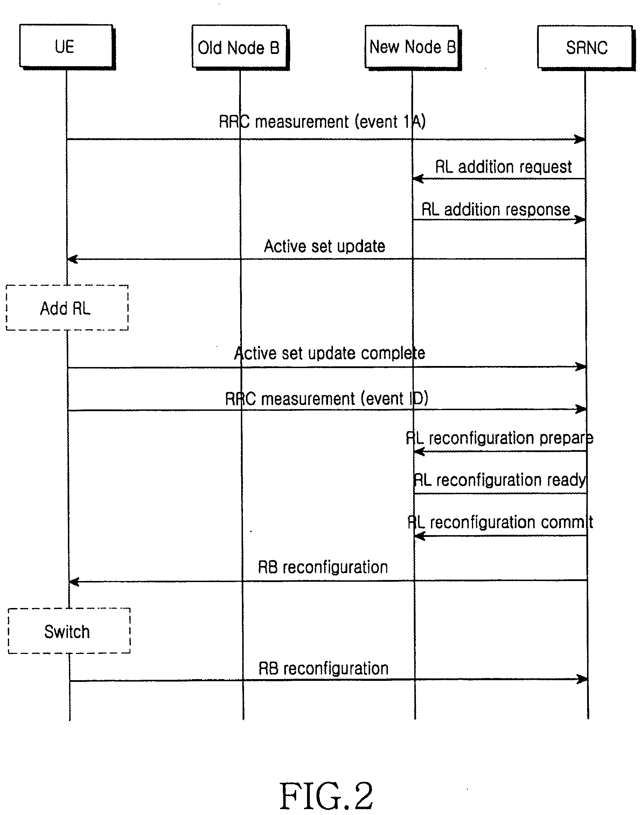

When HS-DPA related shared channels are used, the downlink information is transferred via one cell only. The downlink information is transferred via the serving HS-DSCH cell. When the UE moves towards another cell, an Original HS-DSCH serving cell change procedure is performed. An overview of the original HS-DSCH serving cell change procedure, involving a change of node B case, is illustrated in FIG. 2.

The procedure starts with a measurement report from the UE indicating that the quality of the new radio link is good (event 1A). The UTRAN then instructs the target node B which manages target cell to establish the new radio connection. Subsequently, the UE is informed about the addition of the radio link to the active set.

When the new radio link becomes the best cell, the UE sends another measurement report (event 1D). Upon receiving this report, the UTRAN orders the target node B to establish the HS-DPA configuration. Subsequently, the UE is informed about the HS-DSCH serving cell change which is done by means of a radio bearer reconfiguration procedure.
The original HS-DSCH serving cell change procedure has been shown to involve significant delays which degrade the overall throughput. If the signaling radio bearers (RBs) are transported over the HS-DPA, the current procedure may also result in an unacceptable call drop rate. This is because the message instructing the UE to perform the HS-DSCH serving cell change is delivered via the old HS-DSCH serving cell. If radio conditions are changing quickly (for example, a UE that is rapidly moving), it may not be possible to successfully deliver the message which will result in a dropped call.

Discussion paper "Enhanced HSDPA Re-pointing Scheme", 3GPP TSG-RAN WG2 #48, R2-051969, 29 August 2005, pages 1-8, XP002416750 discloses an enhanced HSDPA re-pointing scheme which uses pre-loading of UE and NodeB with HS related configuration, parallel monitoring of source and target NodeB HS-SCCHS, and implicit re-pointing to target NodeB at first scheduling occurrence.

Discussion paper "Proposal for supporting Real Time services over HSDPA" 3GPP TSG-RAN2 #46BIS, 4 April 2005, pages 1-6, XP002368691 addresses service interruption time in case of handover. It is suggested that the UTRAN pre-configures resources to get ready for the HSDPA serving link handover.

It is the object of the present invention to enable an improved transmission and reception of packet data with a reduced additional resource allocation for active set cells.

The object is solved by the subject matter of the independent claims.

Preferred embodiments of the present invention are defined by the dependent claims.

An aspect of exemplary embodiments of the present invention is to address at least the above problems and/or disadvantages and to provide at least the advantages described below. Accordingly, an aspect of exemplary embodiments of the present invention is to provide a system and method for an additional measurement event and a modified allocation procedure in a UTRAN.

The HS-SCCH codes, the hybrid automatic request (HARQ) memory and the power (related to the allocated initial capacity) are the main scarce resources that UTRAN allocates for a pre-configured/ candidate HS cell.

According to an exemplary embodiment of the present invention, two proposals for reducing the additional resource allocation are presented. The first proposal involves a) the introduction of an additional measurement event and the second proposal involves the introduction of a modified allocation procedure.

The two solutions are independent. Therefore, each option can be used by itself. However, the additional measurement event and the modified allocation procedure may also be used in conjunction with each other.

Furthermore, the node B can detect that the UE has completed the HS-DSCH serving cell change. This procedure facilitates the use of a limited 'initial' control channel configuration for candidate set cells, to ultimately limit UE complexity.

### BRIEF DESCRIPTION OF THE DRAWINGS

The above and other exemplary objects, features and advantages of certain exemplary embodiments of the present invention will be more apparent from the following description taken in conjunction with the accompanying drawings, in which:
FIG. 1A and 1B are diagrams illustrating the typical architecture of a cellular radio system comprising one or more core networks (CNs) for the Universal Mobile Telecommunications System (UMTS);
FIG. 2 is a diagram illustrating an original HS-DSCH serving cell change procedure which involves a change of node B case;
FIG. 3 is a diagram illustrating an enhanced HS-DSCH serving cell change procedure which involves a change of node B case;
FIG. 4A is a diagram illustrating an architecture of the HS-DPA related functionality of a UE;
FIG. 4B and 4C are diagrams illustrating an architecture of the HS-DPA related functionality of a node B;
FIG. 5A is a flowchart illustrating the behavior of the UE according to an exemplary embodiment of the present invention;
FIG. 5B is a flowchart illustrating the behavior of the UTRAN according to an exemplary embodiment of the present invention.
FIG. 6A is a flowchart illustrating a procedure for a UE's receipt of data via a new cell according to an exemplary embodiment of the present invention; and
FIG. 6B is a flowchart illustrating a procedure for a node B's pre-allocation of HS-DSCH resources according to an exemplary embodiment of the present invention.

Throughout the drawings, the same drawing reference numerals will be understood to refer to the same elements, features and structures.

### DETAILED DESCRIPTION OF EXEMPLARY EMBODIMETNS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope of the invention. Also, descriptions of well-known functions and constructions are omitted for clarity and conciseness.

The present invention is based on the system of transmitting packet data, such as evolution Dara&Voice(EV-DV), Long Term Evolotion(LTE) Wideband Code Division Multiple Access (WCDMA) High Speed Downlink Packet Access (HSDPA).An exemplary embodiment of the present invention will be described herein with reference to a WCDMA HSDPA. In addition, RNC and Node B mean logical objects in the present invention, which are composed of one physical object or several separated physical objects.

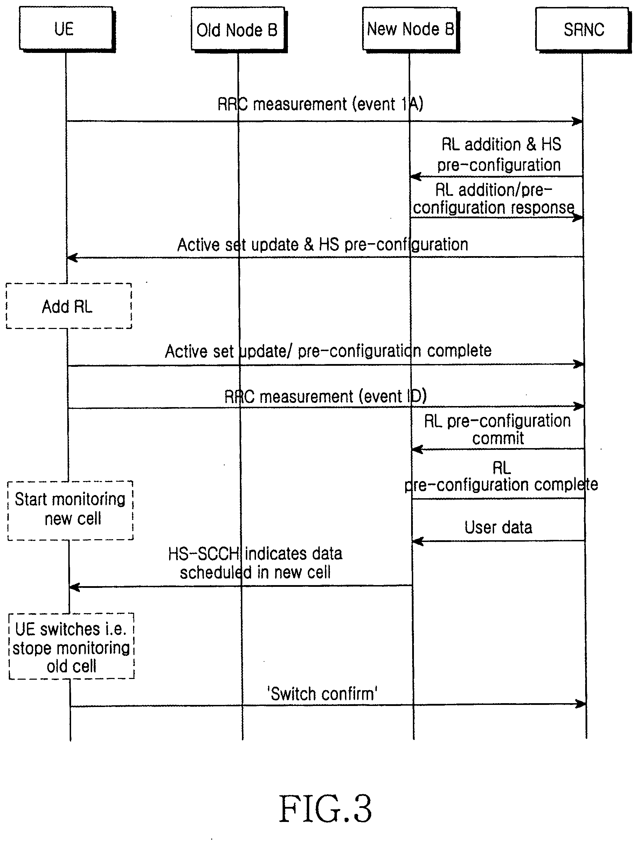

An enhanced procedure is proposed in an attempt to improve the performance of the HS-DSCH cell change procedure. This procedure is referred to as the 'Enhanced HSDPA re-pointing procedure'. An overview of this enhanced HS-DSCH serving cell change procedure, which involves a change of node B case, is provided in FIG. 3.

There are main differences between the Enhanced HSDPA re-pointing procedure and the original HS-DSCH serving cell change procedure.

Whenever a cell is added to the active set, the RNC may decide to prepare the UE and the node B for a possible HS-DSCH cell change to the concerned cell, by pre-configuring HSDPA related information.

When the UE detects that one of the pre-configured cells has become the best, it starts monitoring the HS-SCCHs channel of the concerned cell (after waiting for a configurable amount of time) while it continues normal HSDPA operation for the current serving HS-DSCH cell.

In HSDPA, the HS-SCCH channel is used by the node B to signal information about the scheduling of data, which is transferred via the HS-DSCH channel

When the RNC decides to perform the HS-DSCH cell change, it indicates this to the UE via one of the HS-SCCHs of the concerned target cell. Upon detection of data that is scheduled via an HS pre-configured (HS candidate) cell, the UE switches. For example, the concerned cell becomes the serving HS-DSCH cell

Prior to the indication on HS-SCCH such as prior to switching to the new cell, the RNC may order the current cell to discontinue HS- transmission. The source node may provide status information regarding data that is still outstanding. Alternatively, the RNC may delay discontinuation of the HS-transmission in the current cell to reduce the interruption time. However, this may result in unnecessary retransmissions

It should be noted that the Enhanced HS-DPA re-pointing procedure applies a modified version of the Radio Link Reconfiguration procedure, in which the HDSPA configuration is preloaded during a prepare/ready phase while the actual use of the configuration triggered by the commit is delayed (or does not happen at all).

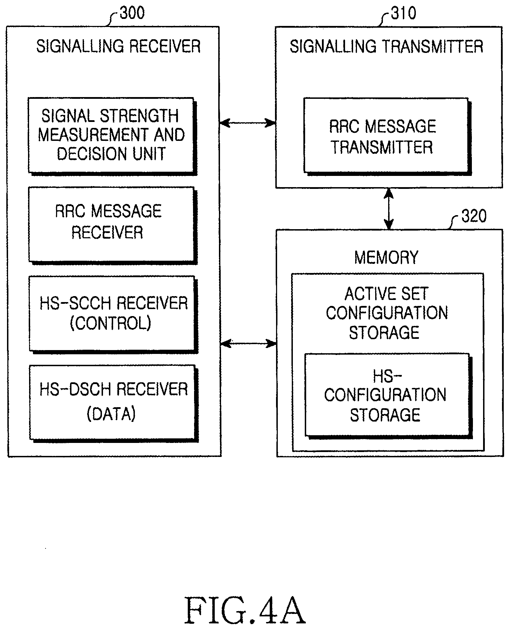

FIG. 4A illustrates an architecture of the HS-DPA related functionality of a UE. The UE comprises a signaling receiver, a signaling transmitter and memory. The signaling receiver 300 comprises a unit that measures the signal strengths of cells. The unit also determines whether a condition for initiating a measurement report has passed a section that handles the reception of the RRC (radio resource control) messages and a section that receives the HS-DPA control information, such as HS-SCCH (High Speed Shared Control Channel) in the UMTS and a section that receives the HS-DPA data information such as the HS-DSCH (High Speed Downlink Shared Channel) in the UMTS.

The signaling transmitter 310 mainly handles the transmission of RRC messages. For example, the signaling transmitter 310 focuses on reporting a measurement or on confirming the successful completion of a UTRAN command. The memory 320 comprises configuration information for each active set cell. More specifically, the memory 320 comprises HS-DPA configuration information for the HS-DSCH serving cell.

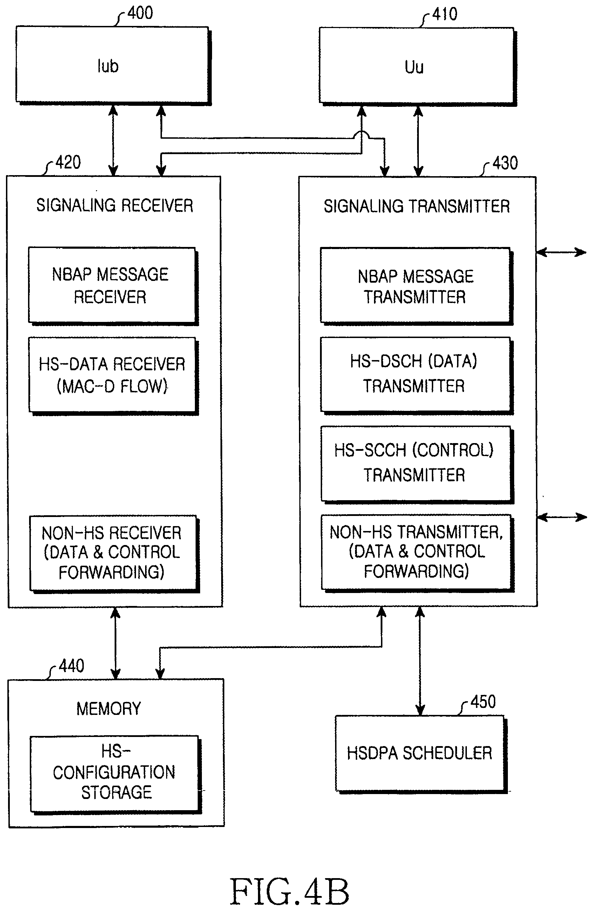

FIG. 4B illustrates an architecture of the HS-DPA related functionality of a node B, comprising a signaling receiver, a signaling transmitter, a memory and a scheduler. The figure also illustrates the Uu and the Iu interfaces. The signaling receiver 420 comprises a section that handles the reception of NBAP messages, a unit for receiving the HS-data from the Iu interface and a unit for receiving the other control and data information, both from the Uu and the Iu interfaces.

The signaling transmitter 430 comprises of a section that handles the transmission of the NBAP (Node B Application Part) and messages for the section that handles the transmission of HS-DPA control information such as HS-SCCH in the UMTS. The signaling transmitter 430 also comprises a section that handles the transmission of HS-DPA data information such as the HS-DSCH in the UMTS. The signaling transmitter 430 also comprises a section that handles the transmission of other control and data information to the Uu and Iu interfaces.

The HSDPA scheduler 450 determines the actual scheduling of HS-DPA data which it communicates to the node B's transmitter and to the UE by transmitting HS-DPA control information.

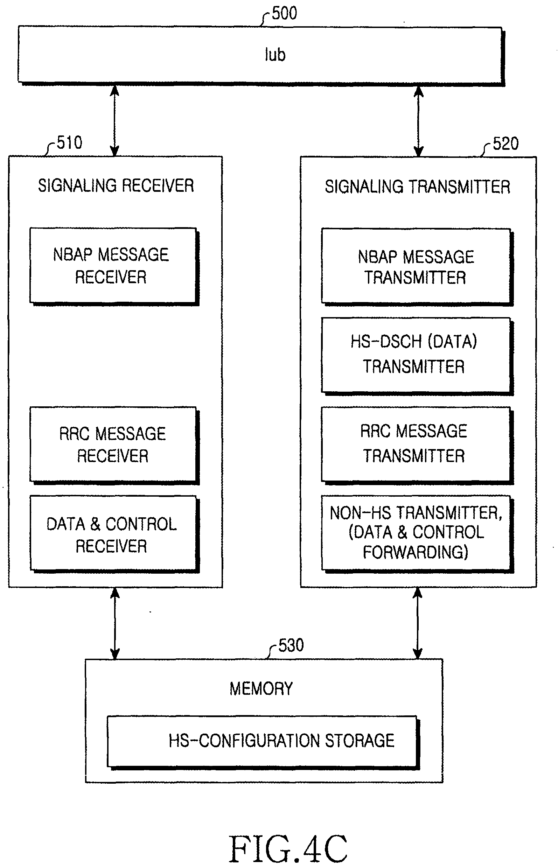

FIG. 4C illustrates an architecture of the HS-DPA related functionality of an (S) RNC, comprising a signaling receiver 510, a signaling transmitter 1520 and a memory 530. The signaling receiver 510 comprises a section to handle the reception of NBAP messages, a unit receive RRC messages and to partially handle the reception of control and data information from the Iub interface 500. This unit also isolates the NBAP and RRC message and forwards them to the respective sections. The signaling transmitter comprises a section to handle the transmission of NBAP messages, a section to handle the transmission of RRC messages, a section to transmit the other control and data information and a section to transmit HS-DPA related data.

During the handover period, the UE may have to monitor twice as many HS-SCCHs as today (4 per cell) which increases UE complexity. In response, it was clarified that the UE may monitor only one HS-SCCH from a candidate/ pre-configured cell, although it could be more.

UTRAN has to allocate additional resources and not only for the serving cell but also for all other cells of the active set. The UE bases the CQI reporting on the serving HS-DSCH cell until it switches to the new cell. For example, the UE will base the CQI reporting on the serving HS-DSCH cell until an indication on an HS-SCCH in the candidate cell is received. As a result, the target cell will initially have to do a "blind" transmission. This may result in loss of several packets initially transmitted via the new cell. Alternating the CQI reports is one way to alleviate this problem. Also, providing reports for candidate cells may overcome this problem.

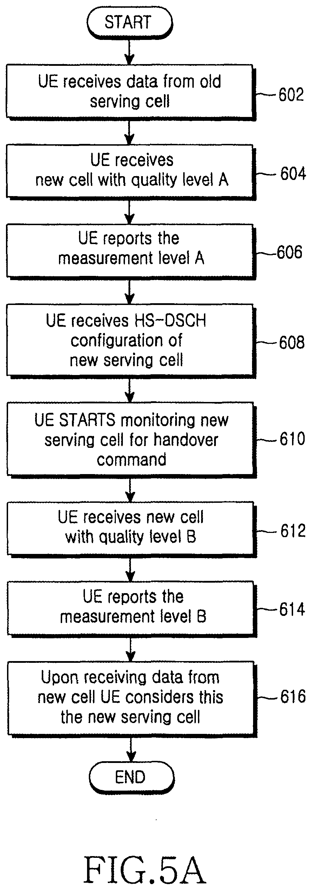

One way to reduce the additional resource allocation is to perform the pre-configuration only for cells whose quality is 'approaching' the quality of the best cell. For example, the addition resource allocation can be performed for cells which are real candidates for the HS-DSCH serving cell change. UTRAN configures the UE to send a report whenever it detects a cell whose quality exceeds a quality level. According to an exemplary implementation, UTRAN configures the UE to send a report when it detects a cell whose quality exceeds a level A as illustrated in FIG. 5A. This quality level may be configurable and relative to the current serving HS-DSCH cell such as the best cell. Upon receiving a report that the quality of a new cell exceeds a quality level A, UTRAN adds the cell to the candidate set by pre-configuring the HS-DSCH configuration.

The above procedures make it possible to limit the number of cells in the candidate set. For example, the candidate set may include only a subset of the active set cells as used in the UMTS. FIG.s 5A and 5B illustrate the behavior of the UE and the UTRAN respectively.

With reference to FIG. 5A, the UE receives data from the old serving cell (step 602). The UE receives a new cell with quality level A (step 604). The UE then reports the measurement level A in step 606. In step 608, the UE receives a HS-DSCH configuration of the new serving cell. The UE starts monitoring the new serving cell for a handover comment in step 610. In step 612, the UE receives the new cell with quality level B. The UE reports the measurement level B (step 614). Once data is received from the new cell, the UE considers this new serving cell (step 616).

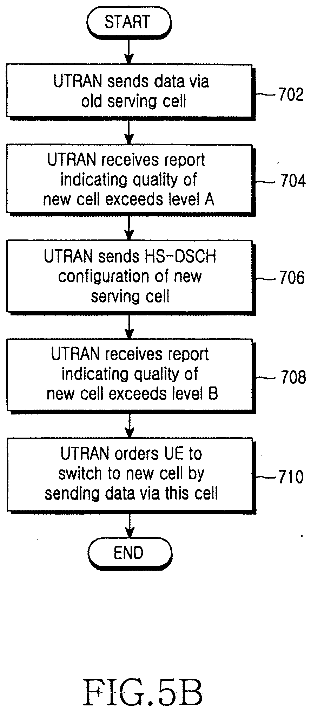

According to an exemplary embodiment of the present invention as illustrated in FIG. 5B, the UTRAN sends data via the old serving cell (step 702). The UTRAN receives a report that indicates that the quality of the new cell exceeds level A (step 704). The UTRAN sends HS-DSCH configuration of the new serving cell in step 706. In step 708, the UTRAN receives a report that indicates that the quality of the new cell exceeds level B. The UTRAN orders the UE to switch to a new cell by sending data via this cell (step 710).
In UMTS, the above can be achieved by configuring an additional measurement for cells that are part of the active set that are neither an HS-DSCH serving cell nor an HS pre-configured cell. For the measurement event to be triggered when an active set cell starts or stops fulfilling the conditions of candidate serving cell, specific options are considered. An extension of the current '1A' and '1B' events and an introduction of two new measurement events are considered.

In solution involving the extension of the current '1A' and '1B' events, the current 1a and 1b events are re-used as triggers to add or remove the HSDPA pre-configuration from cells in the active set.

One measurement is configured to include the events 1a, 1b and 1c for management of the active set and includes event 1d to trigger the HS-DSCH serving cell re-pointing.

In addition, a second measurement is configured to include the events 1a and 1b for management of the HS candidate set.

System parameter W is preferably set to 0, and the reporting range parameter R set to a smaller value than the R used in the first measurement.

For event 1A, the IE(Information Element) "triggering condition 2" is set to "all cells in the active set excluding the cells in the HS candidate set and the HS-DSCH serving cell". It should be noted that this can require a small extension of the current protocol

For event 1B, the IE "triggering condition 2" is set to "all cells in the HS candidate set". It should be noted that this also can require a small extension of the current protocol

For the event 1A, the IE "Measurement Report Transfer Mode" is preferably set to 'AM(Acknowledge Mode)'. The IE "Amount of reporting" is set to '1', and the IE "Reporting interval" is set to 0(no-periodic).

The use of 'AM' for IE "Measurement Report Transfer Mode" mostly applies for networks including cells that do not support HSDPA. The UE is currently not aware of a cell that supports HSDPA and hence it would trigger the event also for cells not supporting HSDPA. Since such a cell would never be added to the HS candidate set, the UE would continue reporting values other than those indicated above which would be used for IEs "Amount of reporting" and IE "Reporting interval".

Rather than extending the current '1A' and '1B' events, two new measurements events can be introduced with the same characteristics as previously described for the extended version of the event 1A and 1B. The advantage of this approach is that it would not affect the currently specified events.

Another way to reduce the additional resource allocation is to indicate to the node B that the resource allocation does not concern a normal resource allocation but a modified version in which the resources only need to be reserved or pre-allocated. The resources are taken in to normal use only when the candidate cell actually becomes the serving cell. The node B may use this information to accept more reservation requests than it can actually handle. The percentage of the 'reserved' resources that will actually end up being used depends on RNC implementation. For example, the HS candidate set management affects the percentage of the 'reserved' resources that will actually end up being used. A parameter could be introduced in the Radio Link Reconfiguration procedure to inform the node B about this likelihood.

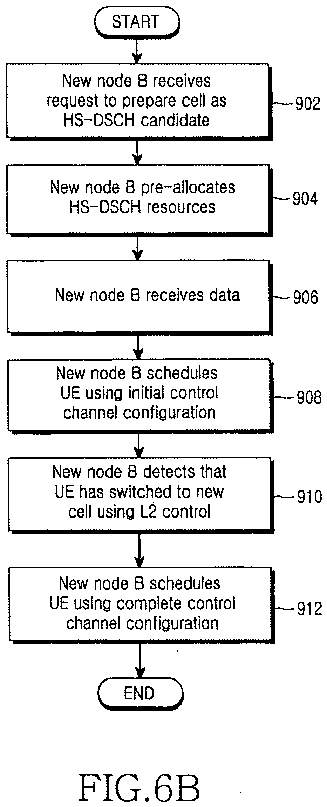

This procedure is illustrated by FIG. 6B, which shows the operation of the 'node B'. More specifically, an exemplary embodiment of the present invention provides a procedure that is simple, fast and does not require any additional control signals. FIG.s 6A and 6B illustrate the procedure for the UE and the node B, respectively according to exemplary embodiments of the present invention.

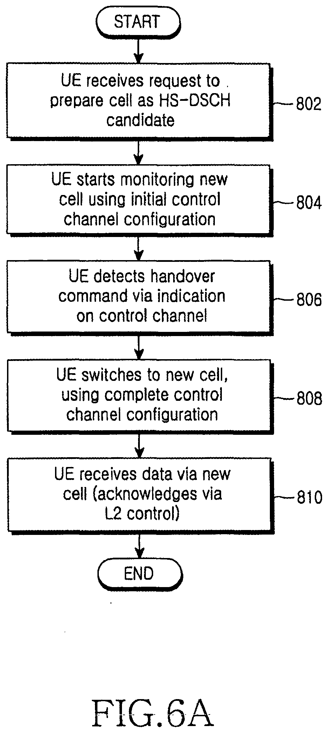

With reference to FIG. 6A, the UE receives a request to prepare the cell as an HS-DSCH candidate (step 802). The UE starts monitoring the new cell using an initial control channel configuration (step 804). The UE detects a handover command via an indication on the control channel (step 806). In step 808, the UE switches to a new cell using a complete control channel configuration. The UE receives data via a new cell which is acknowledged via an L2 control in step 810.

According to FIG. 6B, the new node B receives a request to prepare a cell as an HS-DSCH candidate (step 902). The new node B pre-allocates HS-DSCH resources (step 904). In step 906, the new node B receives data. The new node B schedules the UE using an initial control channel configuration (step 908). In step 910, the new node B detects that the UE has switched to a new cell using an L2 control. The new node B schedules a UE using complete control configuration (step 912).

As previously mentioned, the monitoring of the HS-DSCH control channels for a larger number of cells increases UE complexity. This increase in complexity may be overcome by applying a limited 'initial' control channel configuration for candidate set cells. For example, the number of HS-SCCH a UE must monitor could be reduced to one in a UMTS.

An exemplary embodiment of the present invention provides an apparatus and method for switching between the initial and the normal control channel configuration. The control channel configuration affects the amount of data that can be transferred to a UE. Hence, to ensure continuity in the data transfer rate, it is desirable to use a fast switching procedure.

Once the completion of the re-pointing by the UE has been confirmed, the node B should only switch from the initial to the normal/ complete control channel configuration. Otherwise the UE may not receive any of the control information or the corresponding data.

According to an exemplary embodiment of the present invention, the target node B switches to a normal operation based on the L2 control information for the data received in the new cell. An ACK for x different HARQ process transmissions is received. According to an exemplary implementation, "x" is in the range from 2 - 4. Once the ACK is received, a single ACK is considered to be an insufficient reliable indication when the error ratio of the DTX to ACK is taken into consideration. The error ratio of the DTX to ACK is in the order of 10-2.

The additional resource allocation for the 'Enhanced HSDPA re-pointing procedure' is reduced by performing the pre-configuration only for cells that are 'approaching' the best cell. More specifically, the additional resource allocation is reduced by performing the pre-configuration only for cells becoming a real candidate for the serving cell change, rather than for all cells of the active set

The proposed solution involves the configuration of an additional measurement. However, since the UE is currently required to support up to 8 intra frequency events this is not regarded to be a serious drawback.

The additional resource allocation for the 'Enhanced HSDPA re-pointing procedure' is reduced assuming that only a percentage of the 'reserved' resources will actually end up being used.

The proposed solution involves some changes to the Radio Link Reconfiguration procedure. Since a number of changes are required to be made to the procedure, this is not regarded to be a serious drawback

Also, a simple and fast procedure is proposed by which the node B can switch from initially using one (or a limited number) HS-SCCH to the normal operation upon HS-DPA re-pointing.

The procedure does not require any additional control signaling.

The above described exemplary embodiments of the present invention have been described in the context of a UMTS. However, the present invention may also be applied to other similar systems.

The present invention can also be embodied as computer readable codes on a computer readable recording medium. The computer readable recording medium is an data storage device that can store data which can thereafter be read by a computer system. Examples of the computer readable recording medium include, but are not limited to, read-only memory (ROM), random-access memory (RAM), CD-ROMs, magnetic tapes, floppy disks, optical data storage devices, and carrier waves (such as data transmission through the Internet via wired or wireless transmission paths). The computer readable recording medium can also be distributed over network-coupled computer systems so that the computer readable code is stored and executed in a distributed fashion. Also, functional programs, codes and code segments for accomplishing the present invention can be easily construed as within the scope of the invention by programmers skilled in the art to which the invention pertains.

While the present invention has been shown and described with reference to certain exemplary embodiments thereof, it will be understood by those skilled in the art that various changes in form and details may be made therein without departing from the scope of the invention as defined by the appended claims.

## Claims

1. A method for receiving packet data in a mobile communication system, the method comprising the steps of:
sending first measurement information indicating an addition of a cell to an active set from a user equipment, UE, to a UMTS Terrestrial Radio Access Network, UTRAN;
updating, by the UE, the active set under control of the UTRAN and performing a pre-configuration for a high speed downlink packet access, HSDPA, upon receiving from the UTRAN an active set update information including pre-configuration information for updating the active set and pre-configuring the cell for the HSDPA;
sending second measurement information indicating a change of a serving cell to one of the active set cells from the UE to the UTRAN after the pre-configuration;
monitoring (804) a handover command for the HSDPA from the one of the active set cells using a limited control channel configuration in order to cause a handover by detecting (806) the handover command; and
receiving scheduling information from a source cell serving the UE using a complete control channel configuration;
wherein the limited control channel configuration is using less control channel resources than the complete control channel configuration.

2. The method of claim 1, further comprising, after receiving the handover command, receiving scheduling information from the one of the active set cells using a complete control channel configuration for the HSDPA.

3. The method of claim 1, wherein the monitoring step (804) starts for a predetermined period after the second measurement information indicates the change of the serving cell.

4. The method of claim 1, wherein the first measurement information is based on a first quality level and the second measurement information is based on a second quality level.

5. A method for use in a mobile communication system comprising a user equipment, UE, the method comprising the steps of:
receiving, from the UE, first measurement information indicating an addition of a cell to an active set;
sending an active set update information including pre-configuration information for updating the active set and pre-configuring the cell for a high speed downlink packet access, HSDPA, to the UE;
receiving, from the UE, second measurement information indicating a change of a serving cell to one of the active set cells;
sending (908) a handover command for the HSDPA to the UE using a limited control channel configuration for performing a handover to the one of the active set cells; and
sending (912) scheduling information using a complete control channel configuration to the UE,
wherein the limited control channel configuration is using less control channel resources than the complete control channel configuration.

6. The method of claim 5, further comprising, after sending the handover command, sending scheduling information from the one of the active set cells to the UE using a complete control channel configuration for the HSDPA.

7. The method of claim 5, wherein the first measurement information is based on a first quality level and the second measurement information is based on a second quality level.

8. An apparatus for use in a mobile communication system, comprising:
transmitting means for sending first measurement information indicating an addition of a cell to an active set and second measurement information indicating a change of a serving cell to one of the active set cells to a UMTS Terrestrial Radio Access Network, UTRAN;
storing means for storing pre-configuration information and active set information received in response to the first measurement information for updating the active set and pre-configuring the one of the active set cells for a high speed downlink packet access, HSDPA; and
updating means for performing active set update based on the stored pre-configuration information and active set information;
monitoring means for monitoring a handover command from the one of the active set cells using a limited control channel configuration for performing a handover to the one of the active set cells; and
receiving means for receiving scheduling information from a source cell using a complete control channel configuration,
wherein the limited control channel configuration is using less control channel resources than the complete control channel configuration.

9. The apparatus of claim 8, wherein after receiving the handover command, the receiving means being adapted to receive scheduling information from the one of the active set cells using a complete control channel configuration for the HSDPA.

10. The apparatus of claim 8, wherein the first measurement information is based on a first quality level and the second measurement information is based on a second quality level.

11. An apparatus for use in a mobile communication system comprising a user equipment, UE, comprising:
receiving means for receiving, from the UE via a source cell, first measurement information indicating an addition of a cell to an active set and second measurement information indicating a change of a serving cell to one of the active set cells;
storing means for storing pre-configuration information for pre-configuring the one of the active set cells in response to the first measurement information;
transmitting means for sending active set update information including pre-configuration information for updating the active set and pre-configuring the one of the active set cells for a high speed downlink packet access, HSDPA, to the UE via the source cell;
further transmitting means for sending, via the one of the active set cells, a handover command using a limited control channel configuration for performing a handover and sending scheduling information using a complete control channel configuration to the UE; and
a scheduler for scheduling packet data transmission,
wherein the limited control channel configuration is using less resources than the complete control channel configuration.

12. The apparatus of claim 11, wherein, after sending the handover command, the further transmitting means being adapted to send, via the one of the active set cells, scheduling information using a complete control channel configuration for the HSDPA.

13. The apparatus of claim 11, wherein the first measurement information is based on a first quality level and the second measurement information is based on a second quality level.

## Patentansprüche

1. Verfahren zum Empfangen von Paketdaten in einem mobilen Kommunikationssystem, wobei das Verfahren die Schritte umfasst:
Senden von ersten Messinformationen, die das Hinzufügen einer Zelle zu einem aktiven Satz anzeigen, von einem Nutzergerät UE an ein UMTS Terrestrial Radio Access Network UTRAN;
Aktualisieren des aktiven Satzes durch das UE unter Steuerung des UTRAN und Ausführen einer Vorkonfiguration für einen Hochgeschwidigkeits-Downlink-Paketzugriff HSDPA beim Empfangen von dem UTRAN von Aktualisierungsinformationen des aktiven Satzes, der die Vorkonfigurationsinformationen zum Aktualisieren des aktiven Satzes und zum Vorkonfigurieren der Zelle für den HSDPA aufweist;
Senden von zweiten Messinformationen, die den Wechsel von einer bedienenden Zelle zu einer der Zellen des aktiven Satzes anzeigen, vom UE an das UTRAN nach der Vorkonfiguration;
Überwachen (804) eines Handover-Befehls für den HSDPA von einer der Zellen des aktiven Satzes unter Anwendung einer begrenzten Steuerkanalkonfiguration, um einen Handover durch Erfassen (806) des Handover-Befehls zu bewirken; und
Empfangen von Planungsinformationen von einer Ursprungszelle, die dem UE unter Anwendung einer vollständigen Steuerkanalkonfiguration dient;
wobei die begrenzte Steuerkanalkonfiguration weniger Steuerkanal-Ressourcen verbraucht als die vollständige Steuerkanalkonfiguration.

2. Verfahren nach Anspruch 1, das des Weiteren nach dem Empfang des Handover-Befehls das Empfangen von Planungsinformationen von der einen der Zellen des aktiven Satzes unter Anwendung einer vollständigen Steuerkanalkonfiguration für den HSDPA umfasst.

3. Verfahren nach Anspruch 1, wobei der Überwachungsschritt (804) für einen vorgegebenen Zeitraum beginnt, nachdem die zweiten Messinformationen den Wechsel der bedienenden Zelle anzeigen.

4. Verfahren nach Anspruch 1, wobei die ersten Messinformationen auf einem ersten Qualitätspegel basieren und die zweiten Messinformationen auf einem zweitem Qualitätspegel basieren.

5. Verfahren zur Anwendung in einem mobilen Kommunikationssystem, das ein Nutzergerät UE umfasst, wobei das Verfahren die Schritte umfasst:
Empfangen von dem UE von ersten Messinformationen, die ein Hinzufügen einer Zelle zu einem aktiven Satz anzeigen;
Senden von Aktualisierungsinformationen eines aktiven Satzes mit Vorkonfigurationsinformationen zum Aktualisieren des aktiven Satzes und Vorkonfigurieren für einen Hochgeschwidigkeits-Downlink-Paketzugriff HSDPA an das UE;
Empfangen von dem UE von zweiten Messinformationen, die einen Wechsel einer bedienenden Zelle zu einer der Zellen des aktiven Satzes anzeigen;
Senden (908) eines Handover-Befehls für den HSDPA zum UE unter Anwendung einer begrenzten Steuerkanalkonfiguration zum Durchführen eines Handover an die eine der Zellen des aktiven Satzes und
Senden (912) von Planungsinformationen unter Anwendung einer vollständigen Steuerkanalkonfiguration an das UE;
wobei die begrenzte Steuerkanalkonfiguration weniger Steuerkanal-Ressourcen verbraucht als die vollständige Steuerkanalkonfiguration.

6. Verfahren nach Anspruch 5, das des Weiteren nach dem Senden des Handover-Befehls das Senden von Planungsinformationen von der einen der Zellen des aktiven Satzes an das UE unter Anwendung einer vollständigen Steuerkanalkonfiguration für den HSDPA umfasst.

7. Verfahren nach Anspruch 5, wobei die ersten Messinformationen auf einem ersten Qualitätspegel basieren und die zweiten Messinformationen auf einem zweitem Qualitätspegel basieren.

8. Vorrichtung zur Anwendung in einem mobilen Kommunikationssystem, die umfasst:
Übertragungseinrichtung zum Senden von ersten Messinformationen, die ein Hinzufügen einer Zelle zu einem aktiven Satz anzeigen, und zweiten Messinformationen, die einen Wechsel einer bedienenden Zelle zu einer der Zellen des aktiven Satzes an ein UMTS Terrestrial Radio Access Network UTRAN anzeigen;
Speichereinrichtung zum Speichern von Vorkonfigurationsinformationen und Informationen des aktiven Satzes, die in Reaktion auf die ersten Messinformationen zum Aktualisieren des aktiven Satzes und Vorkonfigurieren der einen der Zellen des aktiven Satzes für einen Hochgeschwidigkeits-Downlink-Paketzugriff HSDPA empfangen werden; und
Aktualisierungseinrichtung zum Durchführen einer Aktualisierung des aktiven Satzes auf der Basis der gespeicherten Vorkonfigurationsinformationen und der Informationen des aktiven Satzes;
Überwachungseinrichtung zum Überwachen eines Handover-Befehls von der einen der Zellen des aktiven Satzes unter Anwendung einer begrenzten Steuerkanalkonfiguration zum Durchführen eines Handover zu der einen der Zellen des aktiven Satzes und
Empfangseinrichtung zum Empfangen von Planungsinformationen von einer Ursprungszelle unter Anwendung einer vollständigen Steuerkanalkonfiguration,
wobei die begrenzte Steuerkanalkonfiguration weniger Steuerkanal-Ressourcen verbraucht als die vollständige Steuerkanalkonfiguration.

9. Vorrichtung nach Anspruch 8, wobei nach dem Empfang des Handover-Befehls die Empfangseinrichtung angepasst ist, um Planungsinformationen von der einen der Zellen des aktiven Satzes unter Anwendung einer vollständigen Steuerkanalkonfiguration für den HSDPA zu empfangen.

10. Vorrichtung nach Anspruch 8, wobei die ersten Messinformationen auf einem ersten Qualitätspegel basieren und die zweiten Messinformationen auf einem zweitem Qualitätspegel basieren.

11. Vorrichtung zur Anwendung in einem mobilen Kommunikationssystem, das ein Nutzergerät UE umfasst, die umfasst:
Empfangseinrichtung zum Empfangen von dem UE über eine Ursprungszelle von ersten Messinformationen, die ein Hinzufügen einer Zelle zu einem aktiven Satz anzeigen, und zweiten Messinformationen, die einen Wechsel einer bedienenden Zelle zu einer der Zellen des aktiven Satzes anzeigen;
Speichereinrichtung zum Speichern von Vorkonfigurationsinformationen zum Vorkonfigurieren der einen der Zellen des aktiven Satzes in Reaktion auf die ersten Messinformationen;
Übertragungseinrichtung zum Senden von Aktualisierungsinformationen eines aktiven Satzes mit Vorkonfigurationsinformationen zum Aktualisieren des aktiven Satzes und Vorkonfigurieren der einen der Zellen des aktiven Satzes für einen Hochgeschwidigkeits-Downlink-Paketzugriff HSDPA an das UE über die Ursprungszelle;
weitere Übertragungseinrichtung zum Senden über die eine der Zellen des aktiven Satzes eines Handover-Befehls unter Anwendung einer begrenzten Steuerkanalkonfiguration zum Durchführen eines Handover und Senden von Planungsinformationen unter Anwendung einer vollständigen Steuerkanalkonfiguration an das UE und
einen Planer bzw. Scheduler zum Planen der Paketdatenübertragung,
wobei die begrenzte Steuerkanalkonfiguration weniger Ressourcen verbraucht als die vollständige Steuerkanalkonfiguration.

12. Vorrichtung nach Anspruch 11, wobei nach dem Senden des Handover-Befehls die weitere Übertragungseinrichtung angepasst ist, um über die eine der Zellen des aktiven Satzes Planungsinformationen unter Anwendung einer vollständigen Steuerkanalkonfiguration für den HSDPA zu senden.

13. Vorrichtung nach Anspruch 11, wobei die ersten Messinformationen auf einem ersten Qualitätspegel basieren und die zweiten Messinformationen auf einem zweiten Qualitätspegel basieren.

## Revendications

1. Procédé de réception de données par paquets dans un système de communication mobile, le procédé comprenant les étapes suivantes :
envoi d'une première information de mesure, indiquant l'addition d'une cellule à un ensemble actif, d'un matériel d'utilisateur UE, soit User Equipment, à un réseau d'accès radio terrestre UMTS, UTRAN, soit UMTS Terrestrial Radio Access Network ;
actualisation, par l'UE, de l'ensemble actif sous contrôle de l'UTRAN et mise en oeuvre d'une préconfiguration pour un accès par paquets en liaison descendante haut débit HSDPA, soit High Speed Downlink Packet Access, sur réception en provenance de l'UTRAN d'une information d'actualisation d'ensemble actif incluant de l'information de préconfiguration pour actualiser l'ensemble actif et pour préconfigurer la cellule pour le HSDPA ;
envoi à l'UTRAN d'une deuxième information de mesure indiquant un changement d'une cellule de desserte à l'une des cellules de l'ensemble actif de l'UE après la préconfiguration ;
surveillance (804) d'une commande de transfert intercellulaire pour le HSDPA en provenance de ladite cellule parmi les cellules de l'ensemble actif en utilisant une configuration de canal de contrôle limitée de manière à causer un transfert intercellulaire en détectant (806) la commande de transfert intercellulaire ; et
réception d'information d'ordonnancement provenant d'une cellule source de desserte de l'UE en utilisant une configuration de canal de contrôle complète ;
dans lequel la configuration de canal de contrôle limitée utilise moins de ressources du canal de contrôle que la configuration de canal de contrôle complète.

2. Procédé selon la revendication 1, comprenant en outre, après la réception de la commande de transfert intercellulaire, la réception d'information d'ordonnancement provenant de ladite cellule parmi les cellules de l'ensemble actif en utilisant une configuration de canal de contrôle complète pour le HSDPA.

3. Procédé selon la revendication 1, dans lequel l'étape de surveillance (804) commence pour une période prédéterminée après que la deuxième information de mesure indique le changement de la cellule de desserte.

4. Procédé selon la revendication 1, dans lequel la première information de mesure est basée sur un premier niveau de qualité et la deuxième information de mesure est basée sur un deuxième niveau de qualité.

5. Procédé d'utilisation dans un système de communication mobile comprenant un matériel d'utilisateur UE, le procédé comprenant les étapes suivantes :
réception, en provenance de l'UE, d'une première information de mesure indiquant l'addition d'une cellule à un ensemble actif ;
envoi à l'UE d'une information d'actualisation d'ensemble actif incluant de l'information de préconfiguration pour actualiser l'ensemble actif et préconfigurer la cellule pour un accès par paquets en liaison descendante haut débit HSDPA ;
réception, en provenance de l'UE, d'une deuxième information de mesure indiquant un changement de cellule de desserte à l'une des cellules de l'ensemble actif ;
envoi (908) à l'UE d'une commande de transfert pour le HSDPA en utilisant une configuration de canal de contrôle limitée pour mettre en oeuvre un transfert intercellulaire à ladite cellule parmi les cellules de l'ensemble actif ; et
envoi (912) à l'UE d'information d'ordonnancement en utilisant une configuration de canal de contrôle complète,
dans lequel la configuration de canal de contrôle limitée utilise moins de ressources du canal de contrôle que la configuration de canal de contrôle complète.

6. Procédé selon la revendication 5, comprenant en outre, après l'envoi de la commande de transfert intercellulaire, l'envoi à l'UE d'information d'ordonnancement de ladite cellule parmi les cellules de l'ensemble actif en utilisant une configuration de canal de contrôle complète pour le HSDPA.

7. Procédé selon la revendication 5, dans lequel la première information de mesure est basée sur un premier niveau de qualité et la deuxième information de mesure est basée sur un deuxième niveau de qualité.

8. Appareil destiné à être utilisé dans un système de communication mobile, comprenant :
un moyen de transmission pour envoyer une première information de mesure indiquant l'addition d'une cellule à un ensemble actif et une deuxième information de mesure indiquant à un réseau d'accès radio terrestre UMTS, UTRAN, un changement d'une cellule de desserte à l'une des cellules de l'ensemble actif ;
un moyen de stockage pour stocker de l'information de préconfiguration et de l'information d'ensemble actif reçues en réponse à la première information de mesure pour actualiser l'ensemble actif et préconfigurer ladite cellule parmi les cellules de l'ensemble actif pour un accès par paquets en liaison descendante haut débit HSDPA ; et
un moyen d'actualisation pour mettre en oeuvre une actualisation de l'ensemble actif sur base de l'information de préconfiguration stockée et d'information de l'ensemble actif ;
un moyen de surveillance pour surveiller une commande de transfert intercellulaire provenant de ladite cellule parmi les cellules de l'ensemble actif en utilisant une configuration de canal de contrôle limitée pour mettre en oeuvre un transfert intercellulaire à ladite cellule parmi les cellules de l'ensemble actif ; et
un moyen de réception pour recevoir de l'information d'ordonnancement provenant d'une cellule source en utilisant une configuration de canal de contrôle complète,
dans lequel la configuration de canal de contrôle limitée utilise moins de ressources du canal de contrôle que la configuration de canal de contrôle complète.

9. Appareil selon la revendication 8, dans lequel, après réception de la commande de transfert intercellulaire, le moyen de réception est adapté pour recevoir de l'information d'ordonnancement provenant de ladite cellule parmi les cellules de l'ensemble actif en utilisant une configuration de canal de contrôle complète pour le HSDPA.

10. Appareil selon la revendication 8, dans lequel la première information de mesure est basée sur un premier niveau de qualité et la deuxième information de mesure est basée sur un deuxième niveau de qualité.

11. Appareil destiné à être utilisé dans un système de communication mobile comprenant un matériel d'utilisateur UE, comprenant :
un moyen de réception pour recevoir, en provenance de l'UE via une cellule source, une première information de mesure indiquant l'addition d'une cellule à un ensemble actif, et une deuxième information de mesure indiquant un changement de cellule de desserte à l'une des cellules de l'ensemble actif ;
un moyen de stockage pour stocker de l'information de préconfiguration pour préconfigurer ladite cellule parmi les cellules de l'ensemble actif en réponse à la première information de mesure ;
un moyen de transmission pour envoyer de l'information d'actualisation de l'ensemble actif incluant de l'information de préconfiguration pour actualiser l'ensemble actif et pour préconfigurer ladite cellule parmi les cellules de l'ensemble actif pour un accès par paquets en liaison descendante haut débit HSDPA à l'UE via la cellule source ;
un moyen de transmission additionnel pour envoyer, via ladite cellule parmi les cellules de l'ensemble actif, une commande de transfert intercellulaire en utilisant une configuration de canal de contrôle limitée pour mettre en oeuvre un transfert intercellulaire et envoyer à l'UE de l'information d'ordonnancement en utilisant une configuration de canal de contrôle complète ; et
un ordonnanceur pour ordonnancer une transmission de données par paquets,
dans lequel la configuration de canal de contrôle limitée utilise moins de ressources que la configuration de canal de contrôle complète.

12. Appareil selon la revendication 11, dans lequel, après l'envoi de la commande de transfert intercellulaire, le moyen de transmission additionnel est adapté pour envoyer, via ladite cellule parmi les cellules de l'ensemble actif, de l'information d'ordonnancement en utilisant une configuration de canal de contrôle complète pour le HSDPA.

13. Appareil selon la revendication 11, dans lequel la première information de mesure est basée sur un premier niveau de qualité et la deuxième information de mesure est basée sur un deuxième niveau de qualité.
